# EUROPEAN PATENT APPLICATION

(11) **EP 3 598 362 A1**
(43) Date of publication of application: **22.01.2020**
(21) Application number: 18768229.9
(22) Date of filing: 16.03.2018
(51) Int. Cl.: G06Q 10/10, G06Q 10/06, G06Q 50/00, G06F 17/18, G06Q 50/30, G06Q 50/10

(54) **SYSTEM AND METHOD FOR CALCULATING RANKING AND RATING OF MEMBER PROFILES IN INTERNET-BASED SOCIAL NETWORK SERVICE, AND RECORDING MEDIUM THEREFOR**

(30) Priority: 17.03.2017 KR 20170033903; 05.06.2017 KR 20170069576
(71) Applicant: Aroundus, Inc., Seoul 06150 (KR)
(72) Inventor: KIM, Sung Jin, Seoul 06235 (KR)
(74) Representative: Studio Torta S.p.A.
(86) International application number: PCT/KR2018/003078
(87) International publication number: WO 2018/169338

(57) **Abstract**

Provided is a system for generating the rankings and ratings of user profiles in a social network service (SNS). The system includes a communication unit configured to communicate with terminals of users in the SNS and receive profiles including a performance measurement item representing characteristics and interaction data of the users from the terminals of the users, a first storage unit configured to store the profiles and the interaction data, a second storage unit configured to store scoring rule including performance metrics and profile level data regarding the interaction, and a processor configured to extract profiles including a performance measurement item selected according to a user's input received through the communication unit from the profiles stored in the first storage unit, extract interaction data regarding the profiles, and generate rankings and ratings of the profiles by applying the performance metrics of interaction and the scoring rule to the interaction data.

## Description

### [Technical Field]

The present disclosure relates to a system and method for generating rankings and ratings of user or member profiles according to individual users' jobs, work experiences, talents, and skills in Internet-based social network services (SNS).

### [Background Art]

In general, social network services (SNS) with the primary purpose of recruiting and job seeking, and or online job board and recruiting services with social elements, openly discloses online profiles or resume documents written by users to other users or publicly. Such an SNS provides an online environment which enables new potential employers or headhunters to propose better quality jobs to capable talents.

On the other hand, users in such an SNS may try to establish a social network among themselves through the SNS. Also, it is possible to share business-related information among users who have similar occupations or do related work or career.

For example, permanently-employed experts and professionals, who are classified as so-called white collar workers, make their careers open to the public in profile pages through services like "Linkedln" in which recruiting or job board features are integrated with an SNS. "Linkedln" provides an environment in which potential employers or headhunters may propose better quality jobs and new job opportunities to people who already have jobs through online profiles or resumes always made open to the public as mentioned above. However, the service was designed to cater only or mostly permanent and full-time hired professionals or white collar workers and thus is not optimized for freelance and temporarily hired workers, professionals or students.

Most recruiting and job board services mainly used by freelance and non-permanently employed workers handle registered resume document files or online profiles of their users who are seeking jobs as personal information and disclose the resumes or profiles only to premium service subscribing or for-fee member companies that recruit people on their online services. In existing online recruiting and job-seeking services for freelancers and laborers serving the Gig Economy, which manage personal profiles in a closed manner not viewable for free, unlike "Linkedln" that enables headhunters, HR staff and potential employers search talents and offer new job opportunities to white collar professionals, potential employers, casting and model agencies, etc., whether that's a company or an individual, cannot propose new work opportunities and better quality jobs to the registered freelance and temporary laborers directly on the service or platform.

However, Linkedln or other recruiting and job-seeking services do not provide a means for confirming or verifying the authenticity of work experiences and possessed talents and skills listed on resumes or online profiles provided by users. Therefore, although there exist many online recruiting and job-seeking services, many companies and individuals continuously recruit people through referrals made by human connections, that is, recommendations of fellow workers or surrounding people who are relatively reliable in terms of abilities and work experiences.

In addition, resumes, which are exchanged in electronic document files such as MSWord, PPT or PDF, or online profiles (personal work-related information) of jobseekers accessible via existing recruiting and job-seeking services are text-oriented or text-heavy information, may be with a few photos attached in some cases, and in majority allow jobseekers to describe their work experiences in employment basis only, which are optimized for full-time, permanent employees. On such structure of online profile pages of Internet services, it is difficult for talents, or jobseekers, to present or display their possessed talents or skills, especially when one possesses multiple talents and skills, to others to easily understand and grasp the persons' proficiency of each possessed talent or skill at a glance. These text-oriented resumes or online profile information pages, which are hardly interconnected with other information on the Web, have a problem in that considerable time and cost are involved in conducting multiple steps of resume or application reviews, phone screening and onsite interviews to verify whether the work experiences or possessed talents and skills of a corresponding person are genuine, trustworthy and accurate, as well as abilities and competency of the person because it is difficult to verify them with limited text-heavy information contained on electronic files.

### [Disclosure]

### [Technical Problem]

Profile pages or resumes provided through the abovementioned existing online recruiting and job board services based on a social network service (SNS) or that integrated social interaction elements show work experiences and possessed talents and skills information mostly in text format, neither hyperlinked to relevant webpages nor interconnected with other information on the Web, and provide fields to enter work experiences in employment history format only, not by project work experience unit. Therefore, when using such online services, it is difficult for viewers to grasp various characteristics of job seekers including possessed talents, technical skills, proficiency of possessed talents and skills, and the like. Also, on such SNS services and online recruiting services the user composes one's profile information such as work experiences and possessed talents and skills. Such online profile information wrote by the user are not endorsed, validated or certified by other users, thus it is difficult to accurately evaluate the credibility and reliability of the information contained. Therefore, in order to verify the content of profiles or resumes of users of SNS, online recruiting services and Internet services, recruiting process almost always are accompanied by document review, interviews, referral and background checks, etc. for the users before hiring, and thus considerable time and cost are spent on recruiting and employment process.

For this reason, although various Internet-based recruiting and job board services are currently available, many companies are still mainly recruiting people through human connections, that is, recommendations from fellow workers or surrounding people who are relatively reliable in terms of abilities and careers. Such customary recruiting procedure of hiring talents via referrals and recommendations based on human network, the reliability of employment history of jobseekers may be ensured to some extent, but it is still difficult to ensure the reliability of job performance or competencies of the job candidate.

Therefore, in SNSs or online recruiting or job board services integrating social interaction elements, embodiments of the present disclosure should not rely only on pure text information of work experiences and possessed talents and skills, but also provide additional multimedia, such as video files, audio files, links to online multimedia pages such as YouTube videos, photo and image files, and document files, to aid viewers of the online profile to understand talents and skills of a specific user, together with additional information that can help them understand proficiency of talents or skills possessed by the person. Also, the popularity of talents and skills possessed by the specific user and the employment history of the user are "validated" through interaction data between the profile and other users regarding the above information provided by the online profile page. Therefore, the SNS or services of similar sort provided on the Internet, provides an environment in which individual performance can be verified through such experience validation and social interaction process. Also, embodiments of the present disclosure enable users in an SNS to effectively represent and organize their various possessed talents and skills, as well as work experiences through their own online profiles. In this way, a system and method are provided in which the user profiles can easily be customized according to needs of employers, or potential employers, and rankings and ratings of user profiles may be generated through search results.

Specifically, according to some embodiments of the present disclosure, both work experiences and possessed talents and skills, such as singing, acting, and hair styling, can be organized and shown on a user's online profile page in an easy-to-view manner with supplementing multimedia information, such as video files, audio files, photo and image files, and multimedia page links (URLs), to self-prove the authenticity of one's work experience or participation in a project and also user's proficiency of possessed talent or skill. Also, embodiments of the present disclosure may provide interfaces for interactions between the profile page and other users, for example, clicking a "Validate" button on work experiences, whether that's an experience on project basis or employment basis, clicking a "Like" button for a posts registered under specific talent or skill category, giving and receiving recommendation rating and also written recommendation, in relation to one's work experiences. Through above-mentioned technologies, it is possible to provide a system and method for potential employers to more accurately evaluate the authenticity of job candidate's work experiences listed on the online profile as well as the person's capability and growth potential, through examination of actual work experiences and proficiency of possessed talents and skills, rather than relying or depending on personal connections such as school alumni relations, regional relations, and generate the ranking and ratings of users or talents based on interaction data between online profile and other users on an SNS or Internet-based services.

### [Technical Solution]

One aspect of the present disclosure provides a system for generating the rankings and ratings of user or user profiles in an SNS or Internet services, the system including a communication unit configured to communicate with terminals of a plurality of users of the SNS and receive profiles including at least one performance measurement item representing characteristics of each of the plurality of users and interaction data of at least one of the plurality of users regarding the profiles from the terminals of the plurality of users, a first storage unit configured to store the profiles and the interaction data received through the communication unit, a second storage unit configured to store scoring rule information including preset performance metrics and profile data regarding the interaction, and a processor configured to extract a plurality of profiles including a performance measurement item selected according to a user's input received through the communication unit from the profiles stored in the first storage unit, extract interaction data regarding the plurality of profiles, and generate rankings and ratings of the plurality of profiles by applying the performance metrics of interaction and the scoring rule information to the extracted interaction data.

In an embodiment of the present disclosure, characteristics of each of the plurality of users may include at least one of talents of a corresponding user including innate talents or acquired talents and work experience including experience in units of projects or work experience in organizations.

In an embodiment of the present disclosure, the first storage unit may additionally store rich media or multimedia data related to performance measurement items representing characteristics of each of the plurality of users including a keyword related to an appearance, talents, or skills of a corresponding user.

In an embodiment of the present disclosure, the interaction data may include at least one of performance measurement factors including clicking a "Like" button for the at least one performance measurement item included in the plurality of profiles, 'Validating' work experience, giving a recommendation rating, and giving written recommendation.

In an embodiment of the present disclosure, the performance metrics of interaction may include performance level codes preset for the performance measurement factors, performance metric point maximums, performance measurement ranges, performance measurement periods, and weightings preset for each of the performance measurement factors.

In an embodiment of the present disclosure, the processor may generate scores of each of the plurality of profiles by applying the performance metrics of interaction to the interaction data extracted from the first storage unit and generate rankings or ratings of the plurality of profiles on the basis of the scores.

In an embodiment of the present disclosure, the profile level data (or profile rating data) may include information on the number of levels preset for the scores and ranges of each of the levels, and the processor may generate ratings of the plurality of profiles by applying the profile level data to the scores.

In an embodiment of the present disclosure, the performance metrics may be updated so that the performance measurement ranges extend in proportion to the amount of accumulated interaction data.

In an embodiment of the present disclosure, the interaction data may further include work experience validation received from another user regarding a performance measurement item representing the experience.

In an embodiment of the present disclosure, the work experience validation may be received only from a user who has the same work experience as the corresponding user or who has been registered in the system as the same project or organization user as the corresponding user among the plurality of users.

Another aspect of the present disclosure provides a method of generating rankings of user profiles in an Internet-based SNS, the method including: receiving, by a communication unit, profiles including at least one performance measurement item representing characteristics of each of a plurality of users and interaction data of at least one of the plurality of users regarding the profiles from terminals of the plurality of users through an Internet-based network; storing the profiles and the interaction data received through the communication unit in a first storage unit; storing performance metrics preset for interaction and profile level data in a second storage unit; extracting, by a processor, a plurality of profiles including a performance measurement item selected according to a user's input received through the communication unit from the profiles stored in the first storage unit and extracting interaction data regarding the plurality of profiles; and generating, by the processor, rankings and ratings of the plurality of profiles by applying the performance metrics of interaction and the profile level data to the extracted interaction data.

Another aspect of the present disclosure provides a computer-readable recording medium in which a computer program for executing the above-described method of generating rankings of user profiles in an Internet-based SNS in a computer is recorded.

### [Advantageous Effects]

Various embodiments of the present disclosure enable users (or members) to interact with other users' or other members' online profile pages in an Internet-based SNS at all times so that the work experiences and possessed talents or skills of users (e.g., job seekers) are validated (or certified) and verified. Therefore, it is possible to improve the reliability and credibility of the corresponding user profiles. Due to such effect of the invention, when a user initiates recruiting activity in an Internet-based SNS, it is possible to remarkably reduce the cost and time involved to verify applicants' or candidates' work experiences and talents and skills required for the job before employment.

Also, in an Internet-based SNS, the subject of a recruiting activity may deeply understand a jobseeker's talents, technical skills or proficiency, and growth potential as well as authenticity of the works experiences or project experiences of the jobseeker by checking supported multimedia files such as video files, audio files, multimedia Web page links (URLs), and photo and image files registered by the jobseeker to self-prove verified work experiences and proficiency of talents and skills he or she possesses. Further, compared with customary recruiting method where recruiting party receives application forms, resume and CVs in paper-scanned file or electronic document files through emails or webpage uploads or text-oriented online profile pages of existing SNSs or blog services, it is possible to rapidly and accurately grasp a corresponding jobseeker's (applicant or candidate) talents, skills, and personality on the basis of interaction data between the user profile page and other users.

Furthermore, in a process of verifying a jobseeker's experience, the recruiting party or recruiting user may deeply understand a project the jobseeker actually worked on and registered on his or her profile page through data on Project Information Page, which contains description of the output or outcome of the project and link to relevant webpage, and at the same time is organically interconnected with Project Experience Data registered on the jobseeker's profile page, and links to other users' profile pages who participated in the project through the member list, and accurately grasp the jobseeker's project experience by referring to work experiences data of other users who participated in the project. Likewise, the recruiting party or recruiting user may deeply understand an organization where a jobseeker has worked through information on an Organization Information Page, or company information page, that is organically interconnected with work experience data registered by the jobseeker in his or her profile and links to other users' profile pages who were employed or are currently employed by an organization through the member list. The recruiting party or recruiting user may deeply understand an organization where a corresponding jobseeker has worked through profiles of other users, namely past and current colleagues, who currently work in the organization or have worked in the organization in the past regardless of the scale or brand awareness of the organization.

As described above, according to embodiments of the present disclosure, work experiences may be registered in the profile of a user (or member) on project basis, or project unit, and corresponding project, or outcome or result of the project data, may that be a content, product, service, etc., may be linked to relevant webpage and organically interconnected with other project data or organization data. Accordingly, according to embodiments of the present disclosure, the online profiles of all or majority of project workers or members who participated in projects for creating content, such as movies or television programs, TV commercials, online video ads, music albums, musical plays, theatrical drama plays, concerts, print publications and ads, software, products, services, etc. are cumulated and interconnected with project or project outcome data so that talented and experienced talents or jobseekers can easily be searched and identified through their rankings or ratings on the basis of specific experiences or actual performances and be contacted for hiring or collaboration. Through adoption of such technologies, it is possible to build an online environment where the talented and experienced people can easily be discovered, gathered and teamed up for a new project. Eventually, with prosper of such online environment people will be discovered and hired in a project based on their true, verifiable abilities rather than human connections or school ties. In such an environment, people, particularly and primarily, freelance and non-permanently hired workers who mostly work on projects basis, or students who lack work experiences are expected to increasingly exposed and win part-time or project-based work opportunities and accompanying economic rewards proportionate to their performance or abilities.

### [Description of Drawings]

FIG. 1 is a diagram schematically showing a system for generating rankings and ratings of user profile pages in an Internet-based SNS according to an embodiment of the present disclosure.
FIG. 2 is a diagram showing an example of performance level codes and performance level settings according to an embodiment of the present disclosure.
FIG. 3 is a block diagram showing a configuration of a processor according to an embodiment of the present disclosure.
FIG. 4 is a flowchart showing a profile input method according to an embodiment of the present disclosure.
FIG. 5 is a flowchart showing a method of validating work experience of a user according to an embodiment of the present disclosure.
FIG. 6 is a diagram illustrating scoring rules for validating work experience of a user according to an embodiment of the present disclosure.
FIG. 7 is a flowchart showing a method of searching for user profile pages and users interacting with a user profile page according to an embodiment of the present disclosure.
FIG. 8 is a diagram exemplifying interaction data of a user profile according to an embodiment of the present disclosure.
FIG. 9 is a flowchart showing a method of generating rankings and ratings of user profiles according to an embodiment of the present disclosure.
FIG. 10 is a diagram exemplifying profiles of a plurality of users stored in a first storage unit 120 according to an embodiment of the present disclosure.
FIG. 11 is a diagram showing an example of extracting user profiles including "singing" as a performance measurement item according to an embodiment of the present disclosure.
FIG. 12 is a diagram showing an example of extracting interaction data from a first storage unit regarding user profiles including "singing" as a performance measurement item according to an embodiment of the present disclosure.
FIG. 13 is a diagram showing an example of weightings set by performance measurement factor according to an embodiment of the present disclosure.
FIG. 14 is a diagram showing an example of raw scores converted by applying weightings to raw scores according to an embodiment of the present disclosure.
FIG. 15 is a diagram showing an example of levels (ratings) for user profiles classified by ranges of scaled scores according to an embodiment of the present disclosure.
FIG. 16 is a diagram showing an example of rankings and ratings of user profiles classified by scaled scores according to an embodiment of the present disclosure.

### [Modes of the Invention]

Embodiments of the present disclosure are provided as examples for the purpose of describing the technical spirit or purpose of the present disclosure. The scope of the present disclosure is not limited to embodiments set forth herein or detailed description of the embodiments.

Unless otherwise defined, all technical terms and scientific terms have meanings generally understood by those of ordinary skill in the art to which the present disclosure pertains. All the terms used herein are selected to more clearly illustrate the present disclosure and are not intended to limit the scope of the present disclosure.

The expressions "include," "comprise," "have," and the like used herein should be understood as open-ended terms implying the possibility of including other embodiments unless otherwise mentioned in a phrase or sentence including the expressions.

A singular expression may include a meaning of a plurality unless otherwise mentioned, and the same is applied to a singular expression stated in the claims.

The terms "first," "second," etc. used herein are used to distinguish a plurality of components from one another and are not intended to limit the order or importance of the relevant components.

The term "unit" used herein means a software component or hardware component, such as a field-programmable gate array (FPGA) and an application specific integrated circuit (ASIC). However, a "unit" is not limited to hardware and software and may be configured to be in an addressable storage medium or may be configured to run on one or more processors. Therefore, as an example, a "unit" may include components, such as software components, object-oriented software components, class components, and task components, as well as processors, functions, attributes, procedures, subroutines, segments of program codes, drivers, firmware, micro-codes, circuits, data, databases, data structures, tables, arrays, and variables. Functions provided in components and "units" may be combined into a smaller number of components and "units" or subdivided into additional components and "units."

The expression "on the basis of' or "based on" used herein is used to describe one or more factors that influence a decision, an activity of judgement, or an operation described in a phrase or sentence including the relevant expression, and this expression does not exclude an additional factor influencing the decision, the activity of judgement, or the operation.

It will be understood that when a component is referred to as being "coupled" or "connected" to another component in the present disclosure, it may be directly coupled or connected to the other component, or intervening components may be present therebetween.

Hereinafter, embodiments of the present disclosure will be described with reference to the accompanying drawings. Throughout the accompanying drawings, the same or corresponding components are given the same reference numerals. Also, repeated description of the same or corresponding components may be omitted in the following description of embodiments. However, omission of a description of components is not intended to mean exclusion or the components from the embodiments.

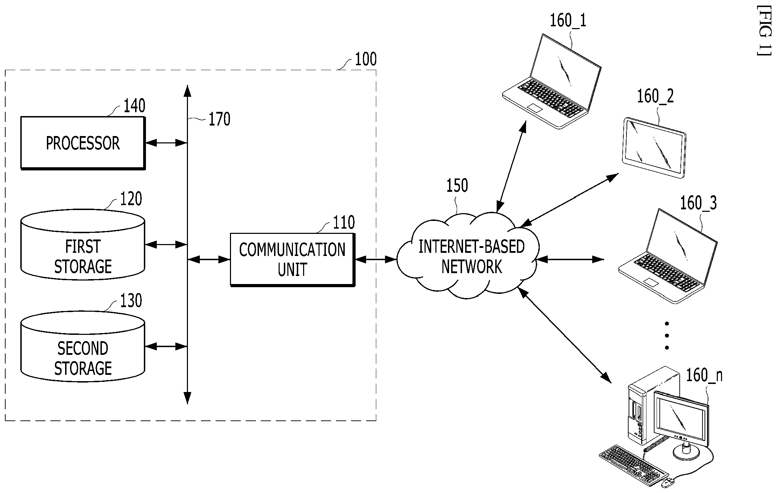

FIG. 1 is a diagram schematically showing a system for generating rankings and ratings of user profiles in an Internet-based SNS according to an embodiment of the present disclosure. Referring to FIG. 1, a system 100 according to an embodiment of the present disclosure includes a communication unit 110 which is connected to an Internet-based network 150 and configured to exchange data with terminals 160_1 to 160_n of a plurality of users (or members) through the Internet-based network 150. The Internet-based network 150 may be configured as a wired transmission medium, such as a fiber-optic cable, a coaxial cable, or an unshielded-twisted-pair (UTP) cable, a wireless transmission medium, such as WiFi, Zigbee, radio frequency (RF), wireless data communication (third generation (3G), long term evolution (LTE), etc.), or satellite communication, or any combination of a wired transmission medium and a wireless transmission medium. The Internet-based network 150 includes a local area network (LAN), a wide area network (WAN), etc. capable of mutually communicating with one or more devices. The communication unit 110 may include a device for accessing the Internet-based network 150 in a wired or wireless manner and transmitting and receiving data, such as a LAN card, a hub, a router, and the like.

In an embodiment of the present disclosure, the communication unit 110 may receive profiles including at least one item representing characteristics of each of the plurality of users and interaction data of the plurality of users regarding the profiles from the terminals 160_1 to 160_n through the Internet-based network 150. In this disclosure, an item representing characteristics of each of a plurality of users (hereinafter, "performance measurement item(s)") includes a user's talents (innate talents), skills (acquired skills), career experience (project work experience, work experience in organizations, etc.), and the like. Also, "interaction data" of a plurality of users may represent, for example, the number of visits of the plurality of users to a profile page, giving a recommendation rating to a profile owner, writing a recommendation for a person, and evaluation data of other users regarding a performance measurement item, such as talents or skills, representing characteristics of a user. For example, interaction data may further include "performance measurement factors," such as clicking a "Like" button for performance measurement items of a plurality of users by other users, validating project experience, and validating work experience in organizations.

The system 100 includes a first storage unit 120 which stores the interaction data received through the communication unit 110 regarding the plurality of user profiles. Also, the system 100 includes a second storage unit 130 which stores the performance metrics of interaction including performance measurement item list information, performance measurement factor list information, performance level code data of performance measurement factors, performance level data preset in performance level codes, etc. and scoring rule, such as profile levels.

In an embodiment, a performance measurement items list is list information of talents, skills, work experiences (both project work experiences and employment work experiences), etc. of each user included in the plurality of user profiles. For example, the performance measurement item list includes list information regarding innate talents of the plurality of users, such as faces, body shapes, voices, dancing, and acting, acquired skills (acquired talents) in categories including fashion or style, musical instruments, sports or athletics, martial arts or the art of self-defense, beauty, cooking, photography, fine art, and magic and subcategories including hair, nails, and makeup in beauty techniques, and performance measurement items, such as career experience including project participation and organization work experience. In an embodiment, the performance measurement item list information may be preset during design of the system 100 and stored in the second storage unit 130. In another embodiment, the performance measurement item list information may be extracted and generated from the profile information input by the plurality of users and may be stored in the second storage unit 130. In still another embodiment, after the performance measurement item list information is preset during design of the system 100 and stored in the second storage unit 130, a performance measurement item may be extracted from profile information input by a user, and the performance measurement item list information stored in the second storage unit 120 may be updated on the basis of the extracted performance measurement item.

In an embodiment, the performance measurement factor list represents list information of factors which enable a user to measure popularity rankings or ratings, reliability rankings or ratings, etc. regarding performance measurement items included in the profiles of other users. For example, when a performance measurement item corresponds to the "singing" item included in user profiles, ratings, the number of raters, etc. may be included as performance measurement factors for measuring popularity levels or popularity rankings of profiles in which the talent of singing has been registered. Also, when a performance measurement item corresponds to the "web designer" item included in user profiles, recommendation ratings, the number of raters, etc. may be included as performance measurement factors for measuring reliability rankings or ratings of profiles in which "web designer" has been registered. In other words, the performance measurement factor list is data for estimating popularity rankings or ratings or reliability rankings or ratings of relevant performance measurement items and may represent interaction data of service users regarding data registered in specific profiles as well as the number of profile visitors. For example, the performance measurement factor list may be list information including the number of clicks on the "Like" button made by other users regarding data registered in specific profiles, the number of project experiences or work experiences in companies validated by other users who share the same project or employment experience, the number of written recommendations by other connected users, recommendation ratings given by other connected users, the number of connected users who have made evaluations, and the like. While existing SNSs or recruiting or job board websites generally show only popularity rankings determined on the basis of the number of visitors to a profile page, embodiments of the present disclosure employ one or more of various performance measurement factors to generate rankings and ratings.

In an embodiment, the performance measurement factor list information may be preset during design of the system 100 and stored in the second storage unit 130 and may be generated on the basis of performance measurement factors for performance measurement items extracted from the profile information input by the plurality of users and then stored in the second storage unit 130. Also, after the performance measurement factor list information is preset during design of the system 100 and stored in the second storage unit 130, a performance measurement factor for a performance measurement item may be extracted from profile information input by a user, and the performance measurement factor list information stored in the second storage unit 120 may be updated on the basis of the extracted performance measurement factor.

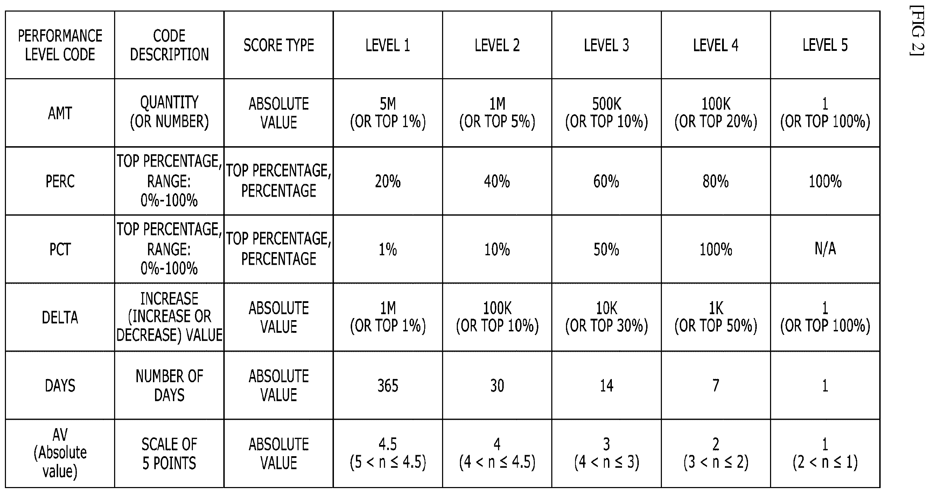

In an embodiment, "performance level codes data" about a performance measurement factor is information on the unit of a score for representing a performance measurement factor for a performance measurement item. For example, when performance measurement factors are the number of clicks on the "Like" button, recommendation ratings and the number of people who have given the ratings, the number of recommendations, and the like, a performance level code is set to "AMT" representing an amount or number and displayed as an absolute value as shown in FIG. 2. In another example, when a performance measurement factor is a recommendation rating and the like, a performance level code is set to "PERC" representing the top percentage of a rating and displayed as a percentage (%) as shown in FIG. 2.

In an embodiment, performance levels data represents performance levels preset according to performance level codes. For example, as shown in FIG. 2, a performance level is determined according to the range of an amount or number when a performance level code is set to "AMT," a performance level is determined according to a percentage value when a performance level code is "PERC," and a performance level is determined according to an increase or decrease in the number of days when a performance level code is "DAYS."

The performance metrics of interaction include a performance metric point maximum preset for performance measurement factors of performance measurement items, performance measurement ranges and performance measurement periods, weighting information preset for each performance measurement factor, and the like. Weightings may be set differently depending on performance measurement factors. Also, profile level data is information on the number of performance levels preset for raw scores calculated by applying performance metrics to performance measurement factors for performance measurement items, and profile level data is used to classify performance ratings for a plurality of user profiles. The performance metrics, performance level codes applied to the performance metrics, and performance level codes of profiles may be updated and stored so that performance measurement ranges and classification ranges may extend in proportion to the amount of accumulated interaction data according to preset scoring rules.

Each of the first storage unit 120 and the second storage unit 130 may include, for example, a solid state disk (SSD), a flash memory, a floppy disk, a flexible disk, a hard disk, a magnetic tape, a compact disc read-only memory (CD-ROM), an optical disk, a Blue-ray disk, a random access memory (RAM), a programmable read-only memory (PROM), an erasable PROM (EPROM), a flash-EPROM, and the like. Although FIG. 1 shows a configuration in which the first storage unit 120 and the second storage unit 130 are installed in the system, the present disclosure is not limited thereto, and the first storage unit 120 and the second storage unit 130 may be installed outside the system 100 or in a cloud server. Also, FIG. 1 shows a configuration of the system 100 including two storage units, such as the first storage unit 120 and the second storage unit 130, but the system 100 may include one storage unit or three or more storage units as necessary.

The system 100 includes a processor 140 configured to generate rankings and ratings of user profiles according to interaction of users. The processor 140 may include a microprocessor, a central processing unit (CPU), an application processor (AP), etc. capable of a preset arithmetic operation, graphics processing, application processing, etc. according to a user's request. Although FIG. 1 shows the single processor 140, a plurality of processors may be provided as necessary, or arithmetic operations may be performed in a cloud computing manner. In an embodiment of the present disclosure, the processor 140 extracts a plurality of user profiles including a performance measurement item selected from a performance measurement item list stored in the second storage unit 130 from a plurality of user profiles stored in the first storage unit 120 and interaction data of the corresponding plurality of user profiles according to a user's input received through the communication unit 110. Also, the processor 140 generates rankings and ratings of the plurality of user profiles by applying scoring rule information including the performance metrics of interaction and profile level data stored in the second storage unit 130 to the extracted interaction data. Specifically, the processor 140 is configured to generate scores of each of the plurality of user profiles by applying the performance metrics of interaction to interaction data extracted from the first storage unit 120 and to generate rankings of the plurality of user profiles according to the scores. Also, the processor 140 is configured to generate levels of each of the plurality of user profiles by applying the profile level data stored in the second storage unit 130 to the generated scores.

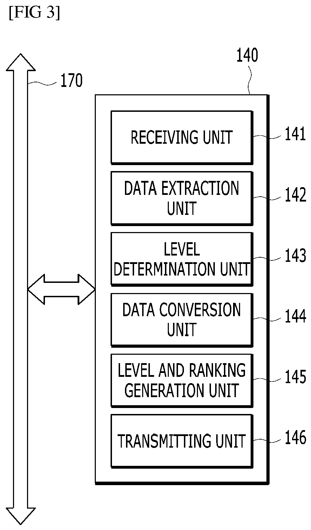

FIG. 3 is a block diagram showing a configuration of the processor 140 according to an embodiment of the present disclosure. Referring to FIG. 3, the processor 140 includes a receiving unit 141, a data extraction unit 142, a level determination unit 143, a data conversion unit 144, a level and ranking generation unit 145, and a transmitting unit 146.

The receiving unit 141 receives information input to the user terminals 160_1 to 160_n by users through the Internet-based network 150, the communication unit 110, and a bus 170. Also, the receiving unit 141 receives a plurality of user profiles and interaction data stored in the first storage unit 120 through the bus 170 and receives scoring rule information, such as the performance metrics of interaction, performance level codes applied to the performance metrics, and profile level data, stored in the second storage unit 130. The information input by the users may be selection information for selecting a performance measurement item, performance measurement factor, and the like.

The data extraction unit 142 searches a plurality of user profiles and interaction data stored in the first storage unit 120 on the basis of the selection information received through the receiving unit 141 and extracts user profiles including the corresponding performance measurement item and interaction data of the corresponding performance measurement factor. The data extraction unit 142 generates scores from the interaction data of each of the extracted user profiles. For example, when a user selects "singing" as a performance measurement item, a score of the performance measurement item may be generated from the number of clicks on the "Like" button during a predetermined time period (e.g., a year, a month, or a week) as a performance measurement factor for measuring popularity rankings or ratings of user profiles.

The level determination unit 143 receives the scores generated by the data extraction unit 142 and extracts performance level code data and performance level data of the performance measurement factor from the second storage unit. The level determination unit 143 determines levels corresponding to the received scores by applying the performance level code data and the performance level data to the scores. For example, when the number of clicks on the "Like" button is selected or set as a performance measurement factor for the performance measurement item "singing," the level determination unit 143 identifies "AMT" as a performance level code for the number of clicks on the "like" button, which is the performance measurement factor, and determines levels corresponding to the scores from performance level data corresponding to "AMT" (e.g., five levels) as shown in FIG. 2.

The data conversion unit 144 receives the scores calculated by the data extraction unit 142 and receives performance level data of the scores from the level determination unit 143. Also, the data conversion unit 144 extracts performance metric point maximums and weighting information preset for each of performance measurement factors from the second storage unit 130 and converts the scores by applying the performance metric point maximum and the weight data to the scores and the performance level data to generate scaled scores.

The level and ranking generation unit 145 generates rankings and ratings of the corresponding user profiles by applying profile level data, which is stored in the second storage unit 130 and corresponds to a range of the scaled scores, to the scaled scores generated by the data conversion unit 144. Information on the generated rankings and ratings of the user profiles is transferred to the transmitting unit 146. The information on the rankings and ratings of the user profiles is transmitted to the user terminals 160_1 to 160_n through the bus 170, the communication unit 110, and the Internet-based network 150.

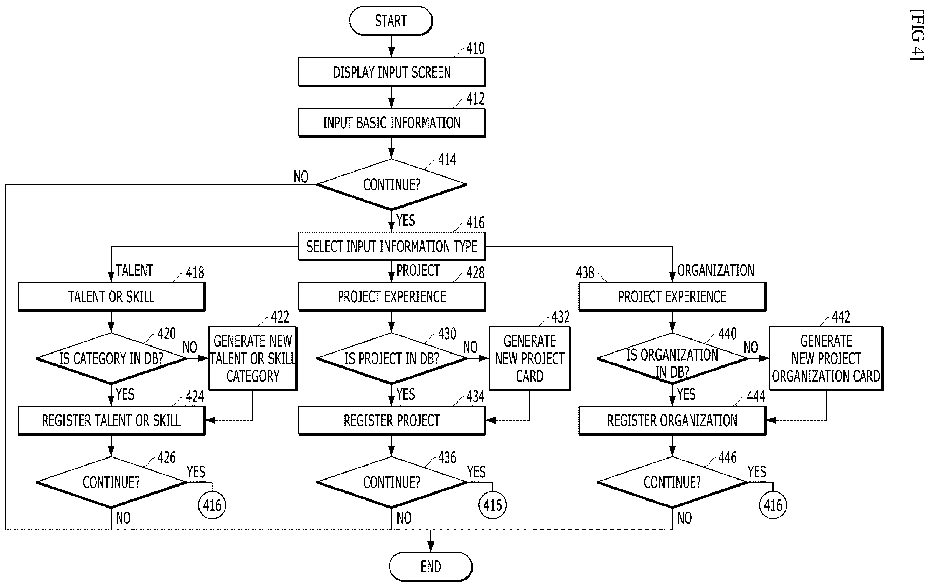

Embodiments of a method of generating rankings and ratings of profiles from profile inputs in the system 100 will be described in detail below with reference to FIGS. 3 to 16. In the flowcharts shown in FIGS. 4, 5, 7, and 9, process steps, method steps, algorithms, etc. are described in sequence, but the processes, methods, and algorithms may be performed in any predetermined sequence as appropriate. In other words, the steps of processes, methods, and algorithms described in various embodiments of the present disclosure are not necessarily performed in the sequence described herein. Also, although some steps are described as being non-simultaneously performed, they may be simultaneously performed in another embodiment. Further, showing examples of processes in the drawings does not mean that the exemplary processes exclude other changes and modification, does not mean that some of the exemplary processes or the steps of the processes are necessary in one of various embodiments of the present disclosure, and does not mean that the exemplary processes are preferable.

FIG. 4 is a flowchart showing a profile input method according to an embodiment of the present disclosure. Referring to FIG. 4, when an input screen for inputting profile information is displayed on the screen of a terminal of a user who is a member of an SNS (410), the user inputs basic information corresponding to his or her personal information (412). The user terminal may be any one of the terminals 160_1 to 160_n described above with reference to FIG. 1. The user terminal includes, but is not limited to, a desktop computer, a laptop computer, a smart phone, a tablet personal computer, etc. and may be any type of computing device which may access the Internet-based network 150 and enables inputs and screen viewing. In this embodiment, a user himself or herself may input profile information. In another embodiment, when a user does not have the time for writing or managing his or her profile or is not in a situation to write or manage his or her profile, it is possible to entrust writing or management of his or her profile to a specific agent by designating and authorizing the agent.

After inputting the basic information, the user determines whether to store additional information (414). When it is determined that additional information should be stored, the user terminal receives a selection of additional information to be input, that is, the type of input information, such as talents (e.g., innate talents or acquired talents) and work experience of the user (416). Additional information according to this embodiment will be described below with examples of talents, projects, and organizations. However, additional information is not limited thereto and may include various kinds of information, such as fan feeds which are registered on the profile of a specific person as information related to the person by other people who have the right to input information to the profile.

When "talents" or "talents & skills" is selected from among input information types (416), an input window for inputting talents is displayed so that the user may input his or her innate or acquired talents together with relevant multimedia and descriptions (418). When "talents" is selected from among input information types as mentioned above (416), preset talent-related performance measurement items are displayed in the form of a dropdown menu by way of example, and the user may input a talent by selecting one of the performance measurement items displayed in the menu or may select a talent item stored in a database through an autocomplete list function in a text input window (418). When there is no category of a talent to be registered by the user in the database (420), a new talent (or skill) category may be generated by inputting the new talent (or skill) category to the text window (422), and then the talent or skill may be registered in the generated category (424). The talent-related performance measurement items may be provided on the basis of performance measurement item list information stored in the second storage unit 130 of the system 100 of FIG. 1 for generating rankings and ratings of user profiles. After the input of talents is complete, it is determined whether to continuously input additional information on performance measurement items which are scalable on the basis of interaction data of the profile while collecting the interaction data (426). When it is necessary to continuously input information on performance measurement items, an input information type may be selected again (416). When it is determined in step 426 that it is unnecessary to additionally input a performance measurement item and thus the input is complete, the profile information input procedure is finished. In this embodiment, it is possible to upload rich media or multimedia data, such as videos, audio, and pictures, showing the capability, proficiency, or the like corresponding to a talent-related performance measurement item in a file form together with relevant descriptions. The input talent-related information of a user is stored in the first storage unit 120 of the system 100 for generating rankings and ratings of user profiles.

Meanwhile, when "project experience" is selected from among input information types in step 416, it is possible to register or input a project in which the user has participated (428). Subsequently, it is determined whether an input project name has been registered already in the system (430). When it is determined in step 430 that the project has been registered already in the system, the project is selected, and the user is registered as a user who has carried out the project (434). At this time, the system 100 shows the user the search results of project names having the same spelling as the project name input by the user through an autocomplete dropdown list function so that the user can select a project when there is a project to be input among registered projects. The projects registered in the system 100 may be provided on the basis of performance measurement item list information stored in the second storage unit 130. On the other hand, when it is determined in step 430 that the project has not been registered in the system, the user newly generates a project information page or card by inputting his or her project experience (432), registers the project in the database, and also registers himself or herself as a member who has carried out the project (434). Subsequently, after the input of project experience is complete, it is determined whether to additionally input profile information (436). When it is necessary to continuously input profile information, an input information type is selected again (416). On the other hand, when it is determined in step 436 that the input of a category has been completed, the profile input procedure is finished. In this embodiment, it is possible to upload rich media or multimedia data, such as video files, audio files, links (URLs) to multimedia webpages, and photo and image files, showing achievements and the like corresponding to a project-related performance measurement item in a file form together with relevant descriptions. The input project-related information of a user is stored in the first storage unit 120 of the system 100.

Meanwhile, when "employment experience" is selected from among input information types in step 416, it is possible to register or input an organization (e.g., a company) where the user has worked (438). The system 100 checks whether the organization has already been registered in the system (440). When it is checked in step 440 that the organization has been already registered in the system, the organization is selected, and the user is registered as a member who has worked in the organization (444). At this time, the system 100 may show search results corresponding to the spelling of an organization name input by the user through the autocomplete dropdown list function. Organizations registered in the system 100 may be provided on the basis of performance measurement item list information stored in the second storage unit 130. On the other hand, when it is checked in step 440 that the organization has not been registered in the system, the user newly generates an organization information page or card to which he or she may input his or her work experience in the organization (442) and registers himself or herself as a member of the organization (444). Subsequently, after the input of an organization is complete, it is determined in step 446 whether to continuously input profile information. When it is necessary to continuously input profile information, an input information type is selected (416). On the other hand, when it is determined in step 446 that the input has been completed, the profile input procedure is finished. In this embodiment, it is possible to additionally upload rich media or multimedia data, such as video files, audio files, links (URLs) to multimedia webpages, and photo and image files, showing recognition, abilities, achievements, and the like corresponding to an organization-related performance measurement item together with descriptions of the corresponding media. The input organization-related information of a user is stored in the first storage unit 120 of the system 100.

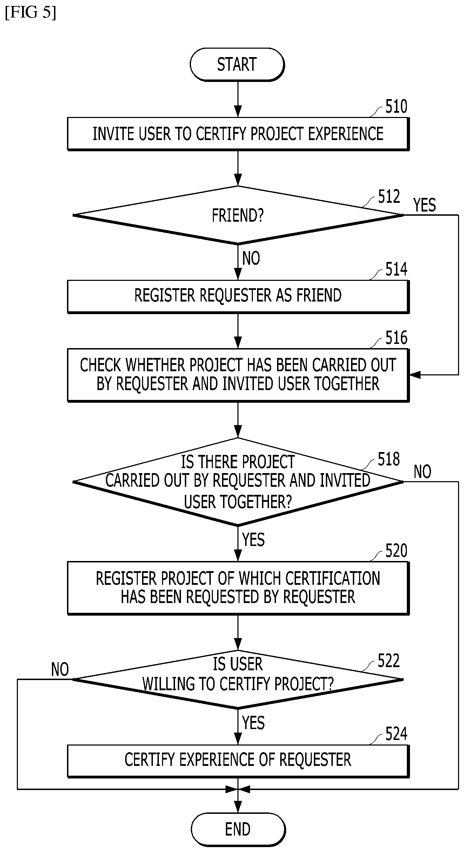

FIG. 5 is a flowchart showing a method of validating a user's work experience, such as a project work experience, in other words work experience on project basis, or an employment experience, work experience under organization through employment, according to an embodiment of the present disclosure. For convenience of description, a project is illustrated as an example of a user's work experience in FIG. 5. However, a user's work experience is not limited to nonprofit projects and includes work experience on project basis, and employment history. Referring to FIG. 5, a user makes a request for validation (or certification) of his or her project experience he himself, or her herself registered (510) or sends the work experience validation request to another user. For example, in step 510, the user invites another user to request work experience validation, and the system 100 checks whether the invited user has been registered as a friend or a personal connection of the user who has requested work experience validation (hereinafter "requester") in an SNS (512). When the invited user has not been registered as a friend of the requester, the invited user registers the requester as a friend (514). The invited user checks whether there is a project that has been carried out by the requester and the invited user together among project experiences registered by the requester (516). When there is no project that has been carried out together in real and registered by the invited user and the requester together, the work experience validation procedure is finished with the experience gets validated. When there is a project that has been carried out by the invited user and the requester together, that is, a project for which the requester has requested work experience validation and which has been carried out by the requester and the invited user together (518), the user registers himself or herself as a member of the project for which the requester has requested work experience validation (520). When the user is willing to validate (or certify) the project work experience according to the request made by the requester (522), the user validates the project experience of the requester (524) and thereby finishes the validation procedure. After registering himself or herself as a project member, the invited user also may not validate the project experience of the requester. In this case, the process is finished with the experience unvalidated. When the user has already been registered as a member of the project for which the requester has requested work experience validation, the step in which the user registers himself or herself as a member of the project may be omitted. In an embodiment of the present disclosure, the work experience validation step 524 can be performed only when the requester and the invited user have the same project work experience or project experience, such as a case where the requester and the invited user have participated in the same project, the corresponding project has been registered in the system, and the work experience validation requester and the request recipient have both been registered as members of the project on the service. When the validator, the user who validated his or her connection's work experience or experiences, withdraws himself or herself from either past or current member list of the project or organization by removing the work experience he or she registered before the validating action or terminates one's account permanently, the validation or validations made by the validator will be revoked or cancelled automatically.

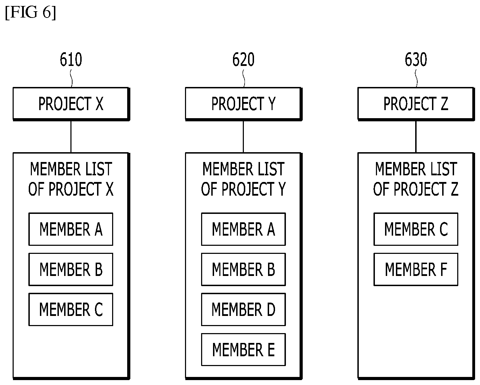

FIG. 6 is a diagram illustrating a method or requirements for validating work experience of a user according to an embodiment of the present disclosure. For convenience of description, an example in which three projects are registered in the system 100 is illustrated in FIG. 6, but the types or number of work experiences registered in the system 100 is not limited thereto. Referring to FIG. 6, for example, users A, B, and C have been registered in a project X 610 registered in the system 100, users A, B, D, and E have been registered in a project Y 620, and users C and F have been registered in a project Z 630. As described above, in this embodiment, only users registered as members of the same project or organization registered in the system 100 may validate the work experience, such as project participation or employment experience in organizations, with each other.

Therefore, the user A may validate (or certify) work experiences of users registered project X as the work experience 610 and the project Y 620 in which the user A has been registered, that is, the users B, C, D, and E can be validated for project Y experience. On the other hand, the user F may validate only work experience of the user C included in the project Z 630. Likewise, the user B may validate work experience of the users A, C, D, and E registered in the project X 610 and the project Y 620 in which the user B has been registered, and the user C may validate work experience of the users A, B, and F registered in the project X 610 and the project Z 630 in which the user C has been registered. Also, the user D may validate work experience of the users A, B, and E registered in the project Y 620 in which the user D has been registered, and the user E may validate work experience of the users A, B, and D registered in the project Y 620 in which the user E has been registered.

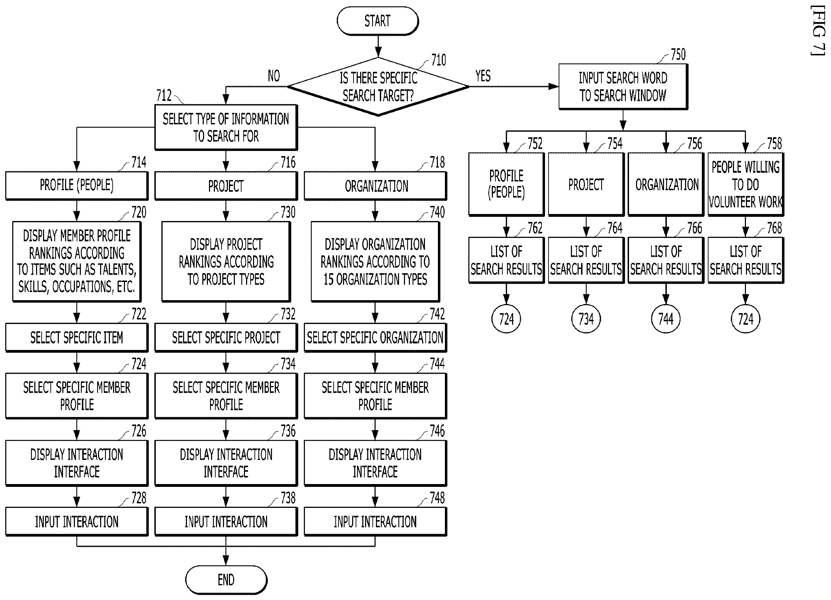

FIG. 7 is a flowchart showing a method of searching for user profiles and interacting with a user profile according to an embodiment of the present disclosure. Referring to FIG. 7, a user may determine a user profile search method according to whether there is a specific search target category (710). When a target search category to be searched by the user is not specified, it is possible to select profiles automatically exposed through a page or pages in which high-ranking profiles are curated by performance measurement item, popular high-ranking projects interlocking with profiles of corresponding project members are curated, or popular high-ranking organizations interlocking with profiles of former and current workers of a corresponding organization are curated or a home page or a landing page of the service. High-ranking user profiles may be shown by region in units of global regions, specific countries, states, provinces, or cities. A user profile list is displayed on search results page in the order of rankings of user profiles, which are determined according to magnitude of certain interaction element between users and specific user's online profile page, such as the cumulative number of clicks on the "Like" button or the number of clicks on a work experience validation button on a person's profile page. Interaction elements can or may include the number of other users' visits to the user profiles, the number of written recommendations a profile page received from users connected as friends on the service, recommendation ratings received and the number of users who have given the ratings, and performance measurement items representing characteristics of users included in the user profiles, displaying profiles that have highest volume of interaction higher up on the search results. From the profiles listed on the search results page, the user who entered the search query may select one to view the details of the profile. The performance measurement items representing characteristics of users include the users' innate talents and acquired skills (innate characteristics such as height, body shape, voice, singing, dancing, and acting and acquired characteristics such as fashion, instrument playing, sports, martial arts, cooking, photography, fine art, and design) registered, work experiences (e.g., participation experience in a project and employment experience in an organization such as a company) registered, the number of fan feeds, which are posts and information made on a specific user composed or made by other users.

When a target to be searched by a user is not specified, the user can select the type of information to search for that compiles personal profiles or are interconnected with personal profiles (712). For the convenience of description, profiles (people), projects, and organizations are described as examples of performance measurement items for interaction in FIG. 7, but information types including profiles are not limited thereto. When the user selects profiles (people) as the type of information to search for (714), a high-ranking profile list is displayed (720) in which rankings are determined on the basis of interaction by service users with a specific user's online profile with regard to one of the performance measurement items including talents, skills, and work experiences (hereinafter "performance measurement item"). For instance, singing, dancing, acting, or cooking, can be the performance measurement item. High-ranking profiles may be exposed on the basis of aggregation of entire performance measurement items or partial sum of several performance measurement items of online profiles instead of a single performance measurement item. When a user selects a performance measurement item that he or she wants to search for or see from among curated items (722), user profiles list based on that specific performance measurement item is displayed in the order of highest rank. In the displayed profile list, the user selects a desired user profile to view (724). When the user selects the user profile that he or she is interested in, an interface screen in which the user may interact with the user profile is displayed (726). According to this embodiment, rich media or multimedia data, such as videos, audio, photos and images of sub-performance measurement items may be displayed in the interface screen. It is possible to interact with performance measurement items, talents, or skills of the user through the displayed in the interface screen, such as clicking the "Like" button, becoming friends (connection) with the corresponding person, following the person, sharing a profile page link with others, or recommending the profile page link to others (728). When interaction with the corresponding item is complete, the interaction procedure is finished.

When the user selects projects as the type of information to search for in step 712 (716), high-ranking projects or project information cards based on interaction data resulting from users clicking the "Like" button for each of the projects registered in the system 100 are displayed according to one or more metrics or types. In other words, the projects or project information cards are displayed on the basis of popularity including the types of overall project results or according to the types of project results, such as movie, broadcasting or television program, music album (music source), advertisement, fashion show, online game, performance shows, concerts, products, publication, software, technology, service, campaign, volunteer work, or social welfare activity (730). When the user selects a specific project in a project list curated by the project type the user is interested (732), user profiles linked to that specific project will be shown on the project member list or the project member list will be displayed together with information on the roles of corresponding users participated in the project, and the user selects or can select a desired person's profile from the displayed user profiles (734). When the user selects a user's profile summary from the member list, an interface screen the user can interact with the user profile while viewing the profile information is displayed (736). According to this embodiment, rich media or multimedia data for showing project results in the interface screen may be displayed together with project description or the link of a relevant website on a project information card. Also, among users who have been registered as project members in the service, only users whose project experience has been validated by other users who are past or current colleagues may input, modify, and add project-related information on the corresponding project information page or card in the same way that only users who have access right to write and modify a document in Google Docs can write and modify content of a specific document to collaborate. The user can interact, such as by clicking the "Like" button provided in the profile interface screen of one of the project members or by writing a guest post on the fan feed page of the corresponding person's profile page (738). When interaction with the corresponding project is complete, the interaction procedure is finished.

When the user selects organizations among information types to search for in step 712 (718), a high-ranking organization list or organization information cards whose rankings are determined on the basis of interaction, such as clicking the "Like" button for an organization, are displayed according to one or more metrics or types (740). An organization list of all types of organizations may be displayed in decreasing order of ranking regardless of types of organizations. Alternatively, a high-ranking organization list of a specific organization type, such as companies or corporations, nonprofit institutions, clubs, private gatherings, expert groups, religious groups, or charity institutions, may be displayed by region types, globally or by specific country. When the user selects an organization in a ranking list of a desired organization type (742), a list of profiles registered as members in the organization is displayed together with title or role information of corresponding users who were or are members in the organization, and the user selects an interesting user profile in the member list of the organization (744). When the user selects the interesting user's profile summary, an interface screen for interacting with the user profile, such as clicking the "Like" button, becoming friends with the corresponding person, following the person, writing a guest post on the fan feed page of the corresponding person's profile page, is displayed (746). In addition to the aforementioned interaction, other types of interaction may be done. In other words, when the user currently works or has worked in the past in the same organization together with the profile owner or the user and has been registered as a member of the organization in the same system, the user may interact to validate the profile owner's work experience in the organization (748). When interaction with the corresponding organization is complete, the interaction procedure is finished.

Meanwhile, when a target to be searched for by the user is specified in step 710, the user types in the specified search keyword to begin the search query, keywords such as a person's name, a specific occupation or profession, an organization or company name, a specific talent or skill category, and a keyword related to appearance, on the search window or search box (750). When the search keyword is entered, it is possible to search for a list of profiles or a specific profile corresponding to the search keyword (752). In addition to a searching for a profile or a person, a project may be searched for by entering a keyword on the search box, such as a project type, the name of project outcome, or a project name (754), and from the project member list, the user can navigate to profile pages of other users who have participated in the same project. Also, an organization may be searched by using an organization name or an organization type as a keyword (756), and from the organization member list, the user can navigate to profile pages of other users who have worked or are working in the same organization. In an embodiment, users may use a function or feature that allow them to externally expose their intention to participate on volunteer works or donate their talents on their profiles. When the function is used, social welfare institutions, volunteer work institutions, local NGOs, or the like may search for and examine the profiles of people who are willing to take part in volunteer works or donate their talents and interact with the people, such as contacting them through communication methods provided in the interface (726) and offering to take part in a proposed volunteer work or donate talent for a non-profit events (728).

According to this embodiment, when profiles are searched through the search box 750 (752), profiles corresponding to the keyword are displayed in a search results list (762). After selecting a specific user profile in the search results list (724), the user can browse and navigate to the corresponding profile where an interactive interface is provided (726) and can interact with the profile (728). When the user's interaction with the profile is complete, the interaction procedure is finished.

When projects are searched (754) using keyword, a search result list of matching project name or relevant projects is displayed (764). After selecting a specific project in the search results list, the user selects a specific user's profile from the member list (734). Subsequently, the screen redirects to the corresponding user's profile page (736) in which an interactive interface is provided, and the user interacts with the profile (738). When interaction with the profile inspected through the member list of the project searched for is complete, the user's interaction procedure with that profile page is finished.

When the user searches for organizations (756) using a keyword, a search results list of matching organization name or relevant organizations is displayed (766). The user selects a specific organization in the search results list and then selects a specific user's profile from the member list (744). Subsequently, the screen redirects to the corresponding user's profile page in which an interactive interface is provided (746), and the user interacts with the profile (748). When interaction with the profile inspected through the member list of the organization searched for is complete, the user's interaction procedure with that profile page is finished.

In another example, when the user searches for people who are willing to do participate in a volunteer work or donate talent for free (758), a search results list of profiles of users' who expressed their interest in participate in volunteer work or donate talent on their profile page is displayed (768), and the user selects the profile of a specific user's profile summary on the search results list (724). Subsequently, the screen redirects to the corresponding user's profile page in which an interactive interface is provided (726), and the user interacts with the profile (728). When the user's interaction with the profile is complete, the interaction procedure is finished.

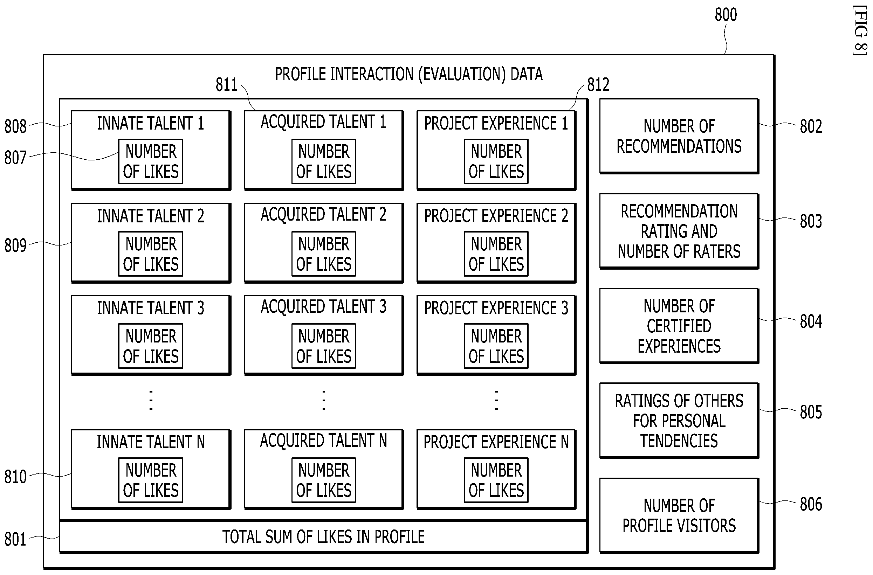

FIG. 8 is a diagram exemplifying interaction data of a user's profile page according to an embodiment of the present disclosure. Interaction data of a user profile may represent other user's evaluation information of performance measurement items registered in the user's profile. For example, referring to FIG. 8, interaction data of a user profile includes a total sum 801 of clicks on the "Like" buttons registered in the user profile, a number 802 of written recommendations, a recommendation rating and with the cumulative number of raters 803, a number of project work experiences validated by other users and a number of validated employment experiences 804, ratings given to soft skills or personal tendencies of the user in relation to group projects or teamwork and a number of people who have given the ratings 805, a number 806 of visitors to the user profile or the number of the profile page viewed by other users, and the like. The total sum 801 of clicks on the "Like" buttons registered in the user profile is a value obtained by adding all numbers 807 of "Like"s given by other users according to innate talents registered by the user. For example, the total sum 801 of "Like"s registered in the user profile is a value obtained by adding a sum 808 of "Like"s clicked by other users to innate talent 1 registered by the profile owner, a sum 809 of "Like"s clicked by other users to innate talent 2 registered by the profile owner, and a sum 810 of "Like"s clicked by other users to innate talent N registered by the profile owner. A sum 811 of "Like"s given to acquired talents registered by the user, just like innate talents, is a value obtained by adding the category- or field-specific sums of "Like"s. Likewise, project experiences include a sum 812 of "Like"s given by other users by each project work experience registered by the user, the sums of work experience validations given to registered project experiences and work experiences different organizations (or companies) by other users who have actually worked together, and the total sum.

In this embodiment, the total sum 801 of clicks on the "Like" button registered in the user profile and the number 806 of visitors to the user profile are used to calculate the popularity ranking or rating of the user profile. Meanwhile, the number 802 of written recommendations for the user profile, the recommendation rating and the number of raters 803, the number of validated project experiences and the number of validated employment experiences in organizations or companies 804, and the ratings given to user's soft skills or personal tendencies (such as the sense of responsibility, thoughtfulness, and a communication capability which are considered important in relation to group projects or teamwork) and the number of people who have given soft skills ratings 805 may be used as performance metrics and data to generate the reliability rating or the credibility ranking of the user or user's profile.

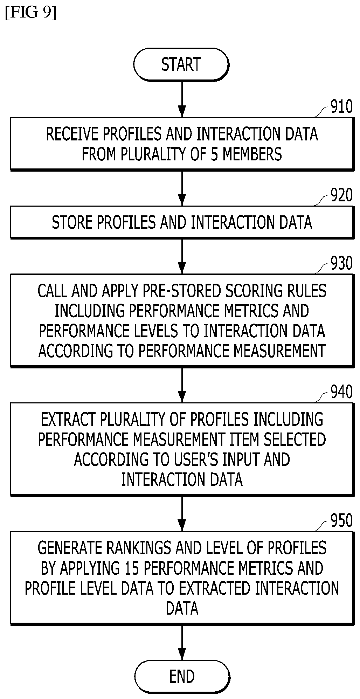

FIG. 9 is a flowchart showing a method of generating rankings and ratings of user profiles according to an embodiment of the present disclosure. Referring to FIGS. 1 to 9, the communication unit 110 receives profiles in which information including at least one performance measurement item representing characteristics of each of the plurality of users is registered and interaction data of the plurality of users regarding information registered in the profiles from the terminals 160_1 to 160_n of the plurality of users through the Internet-based network 150 (910). The profiles of the plurality of users and the interaction data received by the communication unit 110 are transmitted to the first storage unit 120 through the bus 170 and stored therein (920).

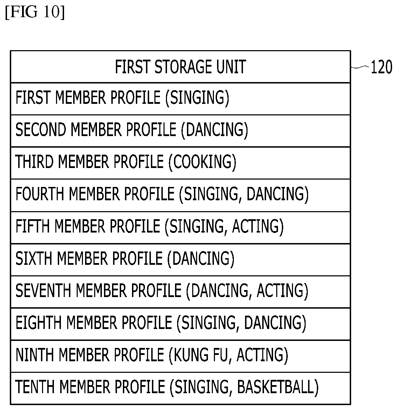

For example, FIG. 10 is a diagram exemplifying profiles of a plurality of users stored in the first storage unit 120 or information registered in the profiles according to an embodiment of the present disclosure. As shown in FIG. 10, the profile of a first user includes information related to the category "singing" which is a performance measurement item, and interaction data with other users regarding the information registered in relation to "singing" is stored in the first storage unit 120. Likewise, information on at least one performance measurement item included in the profiles of second to tenth users and interaction data of those users' profiles with other users regarding the information registered in the performance measurement item is stored in the first storage unit 120.

Meanwhile, scoring rule information, such as the performance metrics of interaction and profile level or profile's tiered ratings, is preset and stored in the second storage unit 130 as described above (930). The performance metrics of interaction include performance metrics, performance level codes, performance metric point maximums, and performance measurement periods preset for performance measurement factors of performance measurement items, weightings preset for each of the performance measurement factors, and the like. In the system 100, the weightings may be set differently or changed according to performance measurement factors by a subject or a user of the service. The profile level data is information on the number of performance levels preset for scores generated by applying the performance metrics to interaction and values representing the ranges of levels. In other words, performance level codes of profiles are used to classify the levels of the plurality of user profiles. The performance metrics, performance level codes applied to the performance metrics, and profile levels may be updated and stored so that performance measurement ranges and classification ranges may extend in proportion to the amount of accumulated interaction data according to preset scoring rules.

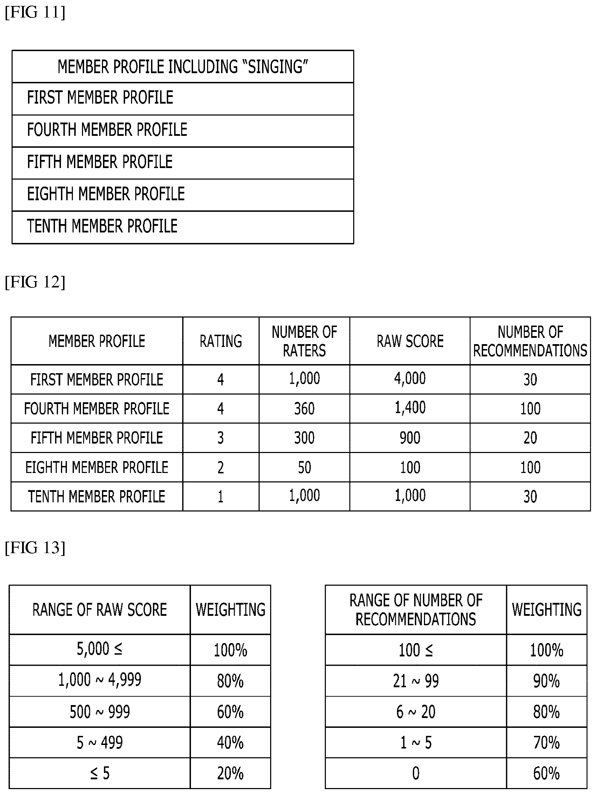

When a user selects a performance measurement item for the plurality of user profiles through one of the terminals 160_1 to 160_n, the processor 140 extracts a plurality of user profiles including the selected performance measurement item among the plurality of user profiles stored in the first storage unit 120 and extracts interaction data of the plurality of user profiles including the performance measurement item from the first storage unit 120 of the system 100 (940). For example, when the profiles of a plurality of users are stored in the first storage unit 120 as shown in FIG. 8, the user may select "singing" as a performance measurement item. Then, the processor 140 extracts user profiles including "singing" as a performance measurement item from the first storage unit 120. Referring to FIG. 11, for example, the processor 140 extracts the profiles of the first user, the fourth user, the fifth user, the eighth user, and the tenth user including the item "singing" among performance measurement items from the first storage unit 120. At the same time, as shown in FIG. 11, the processor 140 extracts information on interaction of other users regarding the performance measurement item "singing" in the profiles of the first user, the fourth user, the fifth user, the eighth user, and the tenth user from the first storage unit 120.

Subsequently, the processor 140 generates rankings and tiered ratings or levels of the extracted user profiles by applying scoring rule information, such as performance metrics, performance level codes applied to the performance metrics, and performance levels, stored in the second storage unit 130 to the extracted interaction data (950). For example, the processor 140 generates a raw score of each user profile using interaction data of the performance measurement item, such as tiered ratings, which correspond to a performance measurement factor of the performance measurement item "singing," for the person's singing abilities given by other users, the number of raters and the number of written recommendations, and the total sum of clicks on the "Like" buttons, in the extracted user profiles. Alternatively, the processor 140 gives rankings and ratings of the profiles of the plurality of users on the basis of the performance metric of "singing" according to the generated raw scores.

Specifically, the processor 140 generates a raw score on the basis of the ratings for the performance measurement item "singing" and the number of raters. The ratings and the number of raters may be determined according to performance level codes applied to the performance metrics of interaction, performance metric point maximums, performance measurement ranges, performance measurement periods, and the like. In the example shown in FIG. 12, a rating represents an average rating given to a corresponding user profile by other users, and the number of raters represents the number of other users who have gave recommendation rating to the corresponding user profile. Also, a raw score is a product of a rating and the number of raters, and the number of written recommendations represents the number of recommendations made by other users in a corresponding user profile. In the example shown in FIG. 12, the product of an average recommendation rating and the number of raters of a performance measurement item is used as a raw score, but a method of generating a raw score is not limited thereto. In another example, it is possible to give levels to each of raters who have given ratings, applying different weights (i.e., performance level weightings) to ratings given by certain raters according to the performance level of the rater, generate scaled ratings by converting the ratings according to the weightings, and generate products of the scaled ratings and the numbers of raters as raw scores. As an example of setting weightings, it is assumed that a user may give a scaled rating of 1 to 5 to other users' profiles and the performance level of a user is classified into level 1 to level 5, where level 1 is the highest or best and level 5 is the lowest or the worst. In this case, when a user with the performance level 1, gives a rating of 3 to the profile of a specific user in relation to a specific field or performance measurement item, a weighting of 5 (multiplied by 5 for instance) may be applied to the rating of 3 given, which is added to the sum of raw scores used to generate a ranking and a level of the user who receives the rating. In another case, when a user with performance level of level 2 gives a rating of 3 to the profile of a specific user in relation to a specific field or performance measurement item, rating of 3 given is multiplied by a weighting of 4, and the product is added to the sum of scores of the profile to which the rating has been given. Also, when a user with performance level 3 gives a rating of 3 to the profile of a specific user in relation to a specific field or performance measurement item, a weighting may be set to 3. When a user with performance level 4 gives a rating of 3, a weighting may be set to 2, and when a user with performance level 5 gives a rating of 3, a weighting may be set to 1 or no weights applied. The pre-determined weighting is applied to the rating given by a user to another or other users to generate a scaled average rating, and the scaled average rating is multiplied by the number of raters to generate a raw score.

Subsequently, as shown in the example of FIG. 13, a scaled score is generated by applying weighting information according to a performance metric point maximum stored in the second storage unit 130 and weighting information according to the number range of recommendation ratings to the raw score.

FIG. 13 shows an example in which a weighting of 100% is given to a raw score of 5,000 or more and weightings are differentially applied to raw scores of less than 5,000 by corresponding lower-tier performance levels where the scaled scores fall into, but the present disclosure is not limited thereto. For example, when the amount of accumulated interaction increases, the range of a raw score (a performance metric point maximum) to which a weighting of 100% is given may be increased to 5,000 or more, and weighting information of the raw score may be updated by adjusting the range of a raw score of less than 5,000 and stored in the second storage unit 130. Likewise, when the amount of accumulated interaction increases, weighting information of the number of recommendations may be updated by adjusting the number range of recommendations for giving a weighting and stored in the second storage unit 130.

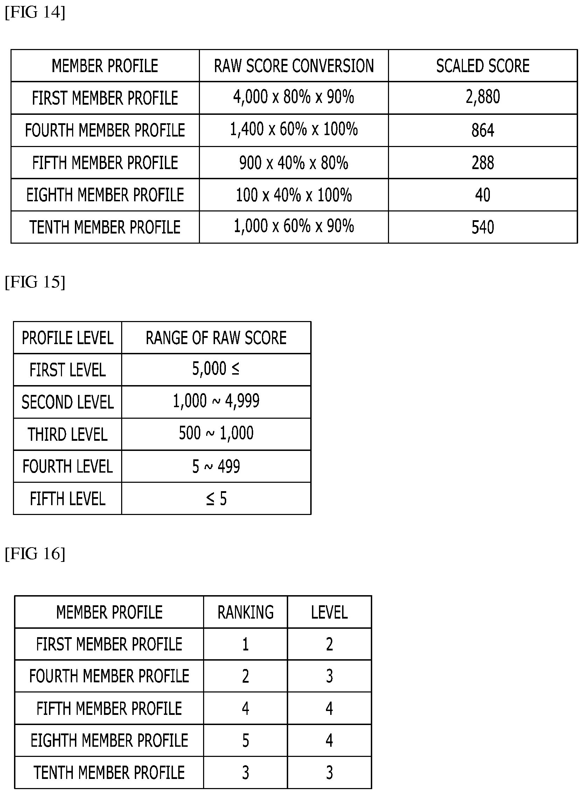

In an embodiment, the processor 140 generates a scaled score by multiplying the raw score of each user profile by applying a pre-determined weighting according to the raw score and a weighting according to the number of recommenders as shown in FIG. 14. Specifically, in the case of the first user profile, a raw score is 4,000, and the number of recommendations is 30. Therefore, the raw score is multiplied by a weighting of 80% according to the raw score and a weighting of 90% according to the number of recommendations to finally generate a scaled score of 2,880. Likewise, the scaled score of each of the fourth user profile, the fifth user profile, the eighth user profile, and the tenth user profile is generated by multiplying the raw score of the corresponding profile by applying corresponding weighting preset for the raw score (a performance level weighting) and a weighting preset according to the number of recommendations received.

In the above-described embodiment, a method of generating a scaled score regarding a performance measurement item on the basis of ratings, the number of raters, and the number of recommendations which are performance measurement factors. However, the present disclosure is not limited thereto, and in another embodiment, it is possible to use a method of generating a scaled score by additionally applying performance measurement factors, such as the number of clicks on the "Like" button, the number of people who have validated the user's work experiences, the number of guest posts registered in fan feeds by other users, and the number of clicks on the "Like" button in the guest posts registered in fan feeds in addition to the above performance measurement items.

Subsequently, the processor 140 generates rankings of the plurality of user profiles on the basis of the scaled scores. Also, as shown in the example of FIG. 15, the processor 140 generates levels (or tiered performance ratings) for the plurality of user profiles by applying the performance level data of profiles according to the ranges of scaled scores, which have been preset and stored in the second storage unit 130, to the scaled scores.

FIG. 15 shows an example in which a level 1, or the highest tier rating, is given to a scaled score of 5,000 or more and levels are given to scaled scores of less than 5,000 by corresponding lower-tier performance levels where the scaled scores fall into, but the present disclosure is not limited thereto. For example, when the amount of accumulated interaction increases, the range of a scaled score to which the first level is given may be increased to 5,000 or more, and performance level data of user profiles based on the scaled scores may be updated by adjusting the range of a scaled score of less than 5,000 and stored in the second storage unit 130.

FIG. 16 is a diagram showing an example of rankings and ratings of user profiles classified by scaled score according to an embodiment of the present disclosure. For example, the first user profile has a scaled score of 2,880 and thus is ranked first but classified as a level 2 according to the performance level data of user profiles.

The above-described method of generating rankings of user profiles in an Internet-based SNS according to embodiments of the present disclosure has a technical effect that the public or workers in a relevant industry or related industries can judge a person or talent based on actual talents or skills he or she possesses and by the proficiency of specific possessed talent or skill as well as the actual project work experiences that are either 'self-proven' with supplementing multimedia proof or 'validated' by other users, who are actual colleagues who have worked on or are currently working on the same project. Various other interaction data between the information registered on the online profile page and other users improves the credibility of the user or the user profile. In such online networking and recruiting environment that significantly improves credibility and trust, users will be able to find and hire talent and also find work opportunities and win the job beyond their personal network, school relations and regional relations.

Although the abovementioned method has been described through specific embodiments, the method may be implemented as computer-readable codes on a computer-readable recording medium. The computer-readable recording medium includes all kinds of recording devices in which data that can be read by a computer system. Examples of the computer-readable recording medium include a ROM, a RAM, a CD-ROM, a magnetic tape, a floppy disk, optical data storage, and the like. Also, the computer-readable recording medium may be distributed to computer systems which are connected through a network so that computer-readable codes may be stored and executed in a distributed manner. Further, functional programs, codes, and code segments for implementing the embodiments may be easily inferred by programmers in the technical field to which the present disclosure pertains.

Although the technical spirit of the present disclosure has been described above with reference to some embodiments and examples shown in the drawings, it should be understood that the present disclosure may be replaced, changed, and modified in various ways by those of ordinary skill in the technical field to which the present disclosure pertains without departing from the technical spirit, purpose and scope of the present disclosure. For example, the scope of the present disclosure is not specifically limited only to Internet-based SNSs due to the characteristic of the Internet-based service industry or technology that the boundary between service realms is easily demolished and the service realms overlap. As an example, an Internet-based SNS according to the present disclosure includes a service for providing Internet-based recruiting and a job board function or people or person data search engines. Further, those replacements, changes, and modifications should be considered as being included in the claims.

## Claims

1. A system for generating rankings and ratings of user profiles in an Internet-based social network service (SNS), the system comprising:
a communication unit configured to communicate with terminals of a plurality of users in the SNS and receive profiles including at least one performance measurement item representing characteristics of each of the plurality of users and interaction data of at least one of the plurality of users regarding the profiles from the terminals of the plurality of users;
a first storage unit configured to store the profiles and the interaction data received through the communication unit;
a second storage unit configured to store scoring rule information including preset performance metrics and profile level data regarding the interaction; and
a processor configured to extract a plurality of user profiles data including a performance measurement item, which is selected according to a user's input received through the communication unit from the profiles stored in the first storage unit, extract interaction data regarding the plurality of profiles, and generate rankings and ratings of the plurality of user profiles by applying the performance metrics of interaction and the scoring rule information to the extracted interaction data.

2. The system of Claim 1, wherein the characteristics of each of the plurality of users include at least one of possessed talents or skills category of a corresponding user including innate talents or acquired skills and work experiences, whether registered in units of projects or employment basis.

3. The system of Claim 1, wherein the first storage unit additionally stores rich media or multimedia data related to performance measurement items representing characteristics of each of the plurality of users including a keyword related to an appearance, talents, or skills of a corresponding user.

4. The system of Claim 2, wherein the interaction data includes at least one of performance measurement factors including clicking a "Like" button for the at least one performance measurement item included in the plurality of user profiles, validation of work experiences, giving a recommendation rating, giving written recommendations, etc.

5. The system of Claim 4, wherein the performance metrics of interaction include performance level codes preset for the performance measurement factors, performance metric point maximums, performance measurement ranges, performance measurement periods, and weightings preset for each of the performance measurement factors.

6. The system of Claim 5, wherein the processor generates scores of each of the plurality of profiles by applying the performance metrics of interaction to the interaction data extracted from the first storage unit and generates rankings or ratings of the plurality of profiles on the basis of the scores.

7. The system is Claim 6, wherein the profile level data includes information on the number of performance levels preset for the scores and ranges of each of the levels, and
the processor generates levels of the plurality of user profiles by applying the profile level data to the scores.

8. The system of Claim 5, wherein the performance metrics are updated so that the performance measurement ranges extend in proportion to the amount of accumulated interaction data between user profiles and other users.

9. The system of Claim 2, wherein the interaction data further includes validation of registered work experiences received from other users who share the same project work experiences regarding a performance measurement item representing the experience.

10. The system of Claim 9, wherein the project work experience validation is given and received mutually only between users who have the same project registered as work experience on the profile page and employment experience validation is given and received mutually only between users who have the same organization registered in the system as employment history or experience among the plurality of users.

11. A method of generating rankings of user profiles in an Internet-based social network service (SNS), the method comprising:
receiving, by a communication unit, profiles including at least one performance measurement item representing characteristics of each of a plurality of users and interaction data of at least one of the plurality of users regarding the profiles from terminals of the plurality of users through an Internet-based network;
storing the profiles data and the interaction data received through the communication unit in a first storage unit;
storing preset performance metrics and profile level data regarding interaction in a second storage unit;
extracting, by a processor, a plurality of profiles including a performance measurement item selected according to a user's input received through the communication unit from the profiles stored in the first storage unit and extracting interaction data regarding the plurality of profiles; and
generating, by the processor, rankings and ratings of the plurality of user profiles by applying the performance metrics of interaction and the profile level data to the extracted interaction data.

12. The method of Claim 11, wherein the characteristics of each of the plurality of users include at least one talent or skill or work experience of a corresponding user.

13. The method of Claim 12, further comprising additionally storing rich media or multimedia data related to the performance measurement item representing the characteristics of each of the users in the first storage unit.

14. The method of Claim 13, wherein the interaction data includes at least one of performance measurement factors including clicking a "Like" button for the at least one performance measurement item included in the plurality of user profiles, validating work experience, giving written recommendation, and giving a recommendation rating.

15. The method of Claim 14, wherein the performance metrics of interaction include performance level codes preset for the performance measurement factors, performance metric point maximums, performance measurement ranges, performance measurement periods, and weightings preset for each of the performance measurement factors.

16. The method of Claim 15, wherein the generating of the rankings and the ratings of the plurality of user profiles comprises:
generating, by the processor, scores of each of the plurality of user profiles by applying the performance metrics of interaction to the interaction data extracted from the first storage unit; and
generating, by the processor, rankings or ratings of the plurality of user profiles according to the scores.

17. The method of Claim 16, wherein the profile level data includes information on the number of performance levels preset for the scores and ranges of each of the levels, and
the generating of the rankings and the ratings of the plurality of profiles comprises generating, by the processor, levels of the plurality of profiles by applying the profile level data to the scores.

18. The method of Claim 15, wherein the performance metrics are updated so that the performance measurement ranges extend in proportion to the amount of accumulated interaction data.

19. The method of Claim 12, wherein the interaction data further includes validation of the work experiences received from other user regarding a performance measurement item representing the experience.

20. The method of claim 19, wherein the validation of work experience is received from only a user who has the same work experience as the corresponding user or who has registered in the service as the same project member or organization member as the corresponding user among the plurality of users.

## Amended claims

### Amended claims under Art. 19.1 PCT

1. A system for generating rankings and ratings of user profiles in an Internet-based social network service (SNS), the system comprising:
a communication unit configured to communicate with terminals of a plurality of users in the SNS and receive profiles including at least one performance measurement item representing characteristics of each of the plurality of users and interaction data of at least one of the plurality of users regarding the profiles from the terminals of the plurality of users;
a first storage unit configured to store the profiles and the interaction data received through the communication unit;
a second storage unit configured to store scoring rule information including preset performance metrics and profile level data regarding the interaction; and
a processor configured to extract a plurality of user profiles data including a performance measurement item, which is selected according to a user's input received through the communication unit from the profiles stored in the first storage unit, extract interaction data regarding the plurality of profiles, and generate rankings and ratings of the plurality of user profiles by applying the performance metrics of interaction and the scoring rule information to the extracted interaction data.

2. The system of Claim 1, wherein the characteristics of each of the plurality of users include at least one of possessed talents or skills category of a corresponding user including innate talents or acquired skills and work experiences, whether registered in units of projects or employment basis.

3. The system of Claim 1, wherein the first storage unit additionally stores rich media or multimedia data related to performance measurement items representing characteristics of each of the plurality of users including a keyword related to an appearance, talents, or skills of a corresponding user.

4. The system of Claim 2, wherein the interaction data includes at least one of performance measurement factors including clicking a "Like" button for the at least one performance measurement item included in the plurality of user profiles, validation of work experiences, giving a recommendation rating, giving written recommendations, etc.

5. The system of Claim 4, wherein the performance metrics of interaction include performance level codes preset for the performance measurement factors, performance metric point maximums, performance measurement ranges, performance measurement periods, and weightings preset for each of the performance measurement factors.

6. The system of Claim 5, wherein the processor generates scores of each of the plurality of profiles by applying the performance metrics of interaction to the interaction data extracted from the first storage unit and generates rankings or ratings of the plurality of profiles on the basis of the scores.

7. The system of Claim 6, wherein the profile level data includes information on the number of performance levels preset for the scores and ranges of each of the levels, and
the processor generates levels of the plurality of user profiles by applying the profile level data to the scores.

8. The system of Claim 5, wherein the performance metrics are updated so that the performance measurement ranges extend in proportion to the amount of accumulated interaction data between user profiles and other users.

9. The system of Claim 2, wherein the interaction data further includes validation of registered work experiences received from other users who share the same project work experiences regarding a performance measurement item representing the experience.

10. The system of Claim 9, wherein the project work experience validation is given and received mutually only between users who have the same project registered as work experience on the profile page and employment experience validation is given and received mutually only between users who have the same organization registered in the system as employment history or experience among the plurality of users.

11. A method of generating rankings and ratings of user profiles in an Internet-based social network service (SNS), the method comprising:
receiving, by a communication unit, profiles including at least one performance measurement item representing characteristics of each of a plurality of users and interaction data of at least one of the plurality of users regarding the profiles from terminals of the plurality of users through an Internet-based network;
storing the profiles data and the interaction data received through the communication unit in a first storage unit;
storing preset performance metrics and profile level data regarding interaction in a second storage unit;
extracting, by a processor, a plurality of profiles including a performance measurement item selected according to a user's input received through the communication unit from the profiles stored in the first storage unit and extracting interaction data regarding the plurality of profiles; and
generating, by the processor, rankings and ratings of the plurality of user profiles by applying the performance metrics of interaction and the profile level data to the extracted interaction data.

12. The method of Claim 11, wherein the characteristics of each of the plurality of users include at least one talent or skill or work experience of a corresponding user.

13. The method of Claim 12, further comprising additionally storing rich media or multimedia data related to the performance measurement item representing the characteristics of each of the users in the first storage unit.

14. The method of Claim 13, wherein the interaction data includes at least one of performance measurement factors including clicking a "Like" button for the at least one performance measurement item included in the plurality of user profiles, validating work experience, giving written recommendation, and giving a recommendation rating.

15. The method of Claim 14, wherein the performance metrics of interaction include performance level codes preset for the performance measurement factors, performance metric point maximums, performance measurement ranges, performance measurement periods, and weightings preset for each of the performance measurement factors.

16. The method of Claim 15, wherein the generating of the rankings and the ratings of the plurality of user profiles comprises:
generating, by the processor, scores of each of the plurality of user profiles by applying the performance metrics of interaction to the interaction data extracted from the first storage unit; and
generating, by the processor, rankings or ratings of the plurality of user profiles according to the scores.

17. The method of Claim 16, wherein the profile level data includes information on the number of performance levels preset for the scores and ranges of each of the levels, and
the generating of the rankings and the ratings of the plurality of profiles comprises generating, by the processor, levels of the plurality of profiles by applying the profile level data to the scores.

18. The method of Claim 15, wherein the performance metrics are updated so that the performance measurement ranges extend in proportion to the amount of accumulated interaction data.

19. The method of Claim 12, wherein the interaction data further includes validation of the work experiences received from other user regarding a performance measurement item representing the experience.

20. The method of claim 19, wherein the validation of work experience is received from only a user who has the same work experience as the corresponding user or who has registered in the service as the same project member or organization member as the corresponding user among the plurality of users.

Statement under Art. 19.1 PCT
As indicated in the Amendments, Claims 7 and 11 were amended as follows.
▪ In Claim 7, the phrase "The system is Claim 6" was amended to "The system of Claim 6."
▪ In Claim 11, the phrase "A method of generating rankings of user profiles in an Internet-based social network service (SNS)" was amended to "A method of generating rankings and ratings of user profiles in an Internet-based social network service (SNS)."
